Europäisches Patentamt

European Patent Office

Office européen des brevets

(19)

(11) **EP 0 762 145 B1**

(12) **FASCICULE DE BREVET EUROPEEN**

(45) Date de publication et mention
de la délivrance du brevet:
**10.04.2002 Bulletin 2002/15**

(51) Int Cl.⁷: **G01T 1/17**

(21) Numéro de dépôt: **96401931.9**

(22) Date de dépôt: **10.09.1996**

(54) **Système de traitement d'impulsions provenant de l'interaction d'une particule gamma avec un détecteur de rayonnement CdTe**

Pulsverarbeitungssystem für einen Gammateilchen-CdTe-Strahlungsdetektor

Gamma particle pulse processing system for CdTe radiation detector

(84) Etats contractants désignés:
**DE GB IT NL**

(30) Priorité: **12.09.1995 FR 9510670**

(43) Date de publication de la demande:
**12.03.1997 Bulletin 1997/11**

(73) Titulaire: **COMMISSARIAT A L'ENERGIE ATOMIQUE**
**75015 Paris (FR)**

(72) Inventeurs:
• **De Antoni, Philippe**
**91940 Les Ulis (FR)**
• **Lebrun, François**
**94500 Champigny sur Marne (FR)**
• **Leray, Jean-Paul**
**91530 Saint Cheron (FR)**

(74) Mandataire: **Dubois-Chabert, Guy et al**
**BREVATOME**
**3, rue du Docteur Lanceraux**
**75008 Paris (FR)**

(56) Documents cités:
**WO-A-90/08331        WO-A-93/15420**
**WO-A-95/11460        US-A- 4 485 442**

**Description**

Domaine technique

L'invention concerne un système pour traiter des impulsions électroniques issues de l'interaction d'une particule gamma avec un détecteur à tellurure de cadmium, afin de corriger les pertes de charges dues à ce détecteur.

L'invention trouve des applications dans le domaine de la spectrométrie gamma et, en particulier pour la réalisation d'un spectromètre portable et d'un imageur à cristaux CdTe utilisable, par exemple, en médecine et dans de nombreux domaines nucléaires.

Etat de la technique

Dans le domaine de la spectrométrie gamma, il est fréquent d'utiliser des spectromètres au germanium refroidi. Ceux-ci ont en effet une très bonne résolution.

Cependant, ils présentent plusieurs inconvénients. En effet, le fait de refroidir le germanium nécessite d'utiliser soit de l'azote liquide, soit un moteur cryogénique, ce qui implique alors un certain poids et un certain encombrement. Il n'est donc pas envisageable de réaliser des systèmes légers, compacts, autonomes et facilement transportables à partir de détecteurs au germanium refroidi.

En outre, le germanium a un numéro atomique relativement faible, à savoir 32, ce qui implique un volume d'absorption totale élevé pour les énergies supérieures à 200 keV ; ceci limite donc au centimètre, la résolution spatiale de systèmes d'imagerie à base de germanium refroidi.

Par ailleurs, le germanium est doté d'une faible largeur de bande interdite (0,7 eV), ce qui n'autorise pas un fonctionnement à température ambiante.

Par contre, il existe des semi-conducteurs à large bande interdite, qui autorisent un fonctionnement à température ambiante. Parmi ceux-ci, il existe l'iodure mercurique, ainsi que le tellurure de cadmium (CdTe). Le CdTe a, en effet, l'avantage d'avoir une bande interdite suffisamment large, à savoir 1,45 eV, pour fonctionner à température ambiante. De plus, il a une densité relativement élevée (6 g.cm$^{-3}$) ainsi que des numéros atomiques élevés (48 et 52), ce qui permet une absorption totale dans des détecteurs de quelques millimètres seulement.

En spectrométrie, le tellurure de cadmium a donc un intérêt tout particulier. A basse énergie, c'est-à-dire pour des énergies inférieures à 50 keV, les performances spectrométriques du tellurure de cadmium sont intermédiaires entre celles proposées par un scintillateur classique et celles proposées par le germanium refroidi.

Cependant, ces performances ne peuvent actuellement pas être maintenues à haute énergie car les détecteurs à tellurure de cadmium ont des pertes de charges très significatives, ce qui se traduit, dans un spectre, par la présence d'un important continuum à gauche des raies spectrales. Cette mauvaise réponse spectrale à haute énergie limite donc la résolution des détecteurs à tellurure de cadmium et, de ce fait, leur emploi se limite souvent à la basse énergie.

Il est donc nécessaire de quantifier les pertes de charges d'un tel détecteur CdTe afin de les corriger.

Le seul critère de correction de ces pertes de charges du détecteur est le temps de montée de l'impulsion issue de l'interaction de la particule gamma sur le détecteur CdTe. Ce temps de montée de l'impulsion est représentatif de l'atténuation de l'amplitude de cette impulsion. Ainsi, plus les pertes de charges sont importantes et plus le temps de montée de l'impulsion est long et donc l'atténuation élevée. On peut ainsi retrouver l'énergie réelle de la particule gamma incidente à partir d'une combinaison de l'amplitude et du temps de montée de l'impulsion.

La société EURORAD fabrique actuellement un appareil de mesure de spectrométrie gamma permettant de corriger de telles pertes de charges. Cet appareil, décrit dans l'article « High resolution gamma ray spectroscopy with CdTe detector system », de M. RICHTER et P. SIFFERT, Nuclear instruments and methods in physics research, 1992, est adaptable aux détecteurs à cristaux CdTe du type THM (Travelling Heater Method) permettant d'effectuer, d'une part, une mesure de l'amplitude de l'impulsion provenant de l'interaction d'une particule gamma avec le détecteur CdTe, et, d'autre part, une mesure du temps de montée de cette impulsion. Cet appareil de mesure permet, en outre, une correction immédiate des pertes de charges du détecteur, puisque l'information obtenue en sortie de cet appareil est directement interprétable comme un simple spectre d'énergie.

Un cristal CdTe présente des temps de montée compris entre environ 500 ns et 8 μs. Or, cet appareil est limité, de par sa conception, à des temps de montée maximum de 2 μs ; au-delà de ce temps de 2 μs au plus, les impulsions ne sont plus prises en compte par le circuit de traitement électronique. Il s'ensuit donc une perte de rendement relativement importante de l'appareil.

De plus, dans cet appareil, la correction des pertes de charges est réalisée au moyen d'une électronique analogique qui doit être adaptée, à chaque fois que le détecteur est changé, au moyen de réglages de type potentiométriques ; ces réglages sont effectués au cours d'une procédure de calibration. Or, cette procédure de calibration est complexe, car les différents détecteurs utilisés présentent une grande dispersion de caractéristiques. Ainsi, à chaque changement de cristal CdTe, la procédure de calibration doit être recommencée.

En conséquence, cet appareil ne permet pas de construire un imageur multicristaux puisque, dans ce cas, cela nécessiterait autant d'électroniques spécifiques que de détecteurs utilisés, ce qui entrainerait un accroissement rédhibitoire du nombre des réglages et de l'encombrement.

Exposé de l'invention

L'invention a pour but de remédier aux inconvénients expliqués précédemment. A cette fin, elle propose un système pour traiter des impulsions issues de détecteurs CdTe afin de corriger les pertes de charges des détecteurs. Ce système de traitement, connectable à un ou plusieurs détecteurs CdTe, sans réglage électronique, prend en compte toutes les impulsions ayant des temps de montée compris entre 500 ns et 8 $\mu$s et propose une procédure très simple d'étalonnage de chaque détecteur.

De façon plus précise, l'invention concerne un système de traitement des impulsions provenant de l'interaction d'une particule gamma avec un détecteur de rayonnements à tellurure de cadmium (CdTe) comportant :

- un préamplificateur de charges apte à amplifier ces impulsions analogiques ;
- des moyens de mesure électroniques assurant une mesure de l'amplitude de chaque impulsion ainsi qu'une mesure du temps de montée de cette impulsion ;

caractérisé en ce que :

- les moyens de mesure électroniques comportent un circuit d'amplitude assurant l'acquisition de l'amplitude de l'impulsion, et un circuit de temps assurant une minimisation du bruit de l'impulsion ainsi qu'une détection de la fin du temps de montée de l'impulsion, ces deux circuits étant couplés pour assurer la détermination du temps de montée de l'impulsion.

Avantageusement, les moyens de mesure électroniques comportent un circuit de rampe connecté au circuit amplitude et au circuit temps.

Selon un mode de réalisation de l'invention, les moyens de mesure électroniques comportent, de plus, une unité logique de contrôle, connectée au circuit d'amplitude, au circuit de temps et au circuit de rampe, pour contrôler l'échange d'informations entre ces circuits.

De préférence, le système de traitement des impulsions provenant de l'interaction d'une particule gamma avec un détecteur de rayonnement à tellurure de cadmium (CdTe) comporte également des moyens de correction pour corriger, en fonction du temps de montée et de l'amplitude de l'impulsion, les pertes de charges du détecteur ;

Avantageusement, ces moyens de correction sont des moyens informatiques aptes à modéliser les pertes de charge du détecteur puis à déterminer et corriger, en fonction de cette modélisation et du temps de montée déterminé par les moyens de mesure, les pertes de charges dûes au détecteur.

L'invention concerne, en outre, un procédé de correction de pertes de charges sur la base de mesures numérisées de l'amplitude et du temps de montée d'impulsions délivrées par un détecteur à tellurure de cadmium. Ce procédé comporte :

- une première étape de mesure, pour chaque temps de montée, de la réponse du détecteur à des sollicitations calibrées et de détermination de la relation de variation de ces réponses en fonction du temps de montée ; et
- une seconde étape de correction des pertes de charges en appliquant cette relation à de nouvelles mesures.

Brève description des figures

- La figure 1 représente schématiquement un circuit de connexion des différents moyens constituant le système de traitement des impulsions issues du détecteur CdTe, conformément à l'invention ;
- La figure 2 représente schématiquement le synoptique de la carte électronique qui permet de déterminer l'amplitude et le temps de montée de l'impulsion issue du détecteur CdTe ;
- La figure 3 représente les chronogrammes de différents signaux rencontrés dans la carte électronique et en sortie de cette carte électronique ; et
- Les figures 4A et 4B représentent des diagrammes amplitude/temps montrant les spectres des raies des impulsions issues du détecteur CdTe.

Description détaillée de modes de réalisation de l'invention

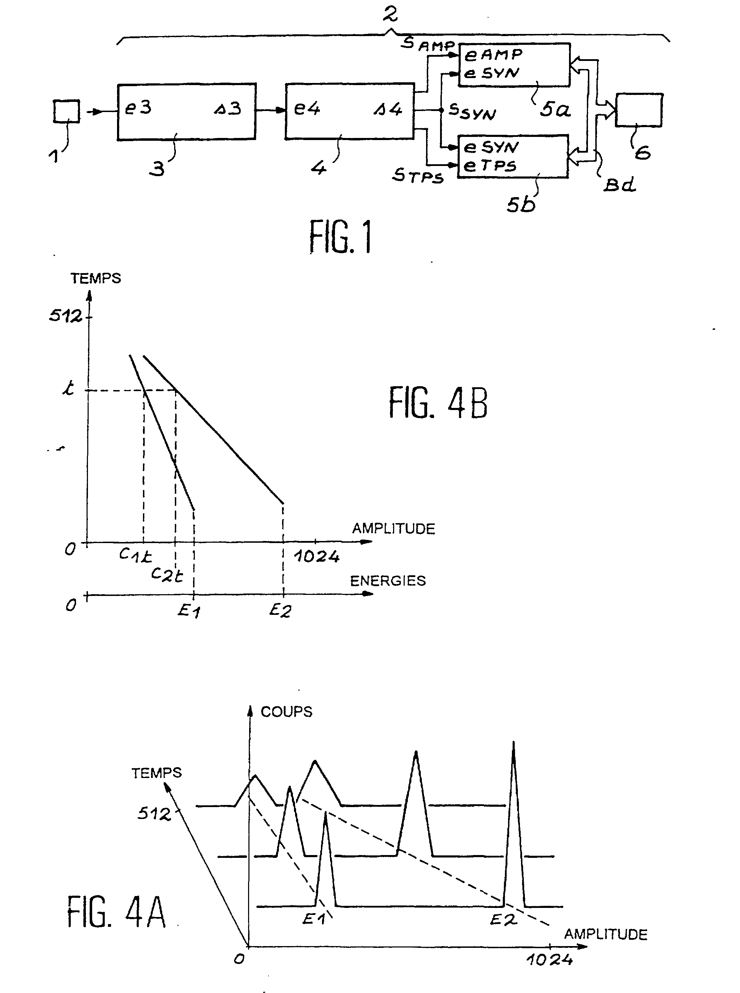

Sur la figure 1, on a représenté schématiquement les différents moyens constituant le système de l'invention, et leurs connexions entre eux, ainsi que le détecteur CdTe auquel est connecté le système.

Sur cette figure 1, on a référencé 1, le détecteur CdTe, et 2 l'ensemble des éléments constituant le système de l'invention.

Comme montré sur cette figure 1, la sortie du détecteur 1 est reliée à l'entrée $e_3$ d'un préamplificateur de charges 3 qui assure la transformation de l'information provenant directement du détecteur 1 en une impulsion analogique apte à être traitée électroniquement. Ce préamplificateur de charges 3 inclut un circuit de polarisation. Ce préamplificateur ainsi que le circuit de polarisation étant de types connus de l'homme du métier, il ne seront pas décrits de façon plus détaillée.

Ce préamplificateur de charges 3 est relié par sa sortie s3 à des moyens de mesure électroniques 4. Ces moyens de mesure 4 consistent en une carte électronique, permettant des mesures biparamétriques : l'amplitude de l'impulsion et le temps de montée de l'impulsion. On appellera cette carte électronique "carte BIPAR".

Comme cela sera expliqué plus en détail dans la suite de la description, cette carte électronique BIPAR permet de déterminer, d'une part, l'amplitude de l'impulsion issue du détecteur 1 et, d'autre part, le temps de montée de cette impulsion. En sortie de cette carte électronique BIPAR 4, on obtient donc trois signaux nécessaires à la suite du traitement :

- un signal d'amplitude $S_{AMP}$ qui correspond à l'amplitude de l'impulsion issue du détecteur 1 ;
- un signal de temps $S_{TPS}$ qui indique le temps de montée de l'impulsion issue du détecteur 1 ; et
- un signal de synchronisation $S_{SYN}$ qui est émis également par cette carte électronique 4, afin de synchroniser l'ensemble des traitements à effectuer sur $S_{AMP}$ et $S_{TPS}$.

Le signal d'amplitude $S_{AMP}$ et le signal de synchronisation $S_{SYN}$ sont envoyés tous les deux vers un codeur analogique/numérique (A/N), référencé 5a.

Parallèlement, le signal de temps $S_{TPS}$ et le signal de synchronisation $S_{SYN}$ sont transmis vers un codeur analogique/numérique, référencé 5b.

Chacun des codeurs A/N Sa et 5b convertit le signal analogique reçu de la carte électronique 4 en un signal numérique apte à être traité par les moyens informatiques 6. Ces codeurs A/N 5a et 5b effectuent les conversions des signaux $S_{AMP}$ et $S_{TPS}$, en synchronisation l'un avec l'autre grâce au signal $S_{SYN}$. Les signaux numériques émis par les codeurs A/N Sa et 5a sont ensuite envoyés vers les moyens informatiques 6 par l'intermédiaire d'un bus de données, référencé Bd.

Selon l'invention, ces codeurs 5a et 5b comportent chacun une mémoire de type RAM dans laquelle sont stockées les données, c'est-à-dire les différents signaux $S_{AMP}$ et $S_{TPS}$, reçus de la carte électronique et auxquelles les moyens informatiques 6 peuvent accéder quand ils le veulent via le bus de données Bd.

Ce sont ces moyens informatiques 6 qui vont traiter les données relatives à l'amplitude et au temps de montée de l'impulsion provenant du détecteur CdTe pour quantifier les pertes de charges. Ces traitements seront décrits de façon plus détaillée dans la suite de la description.

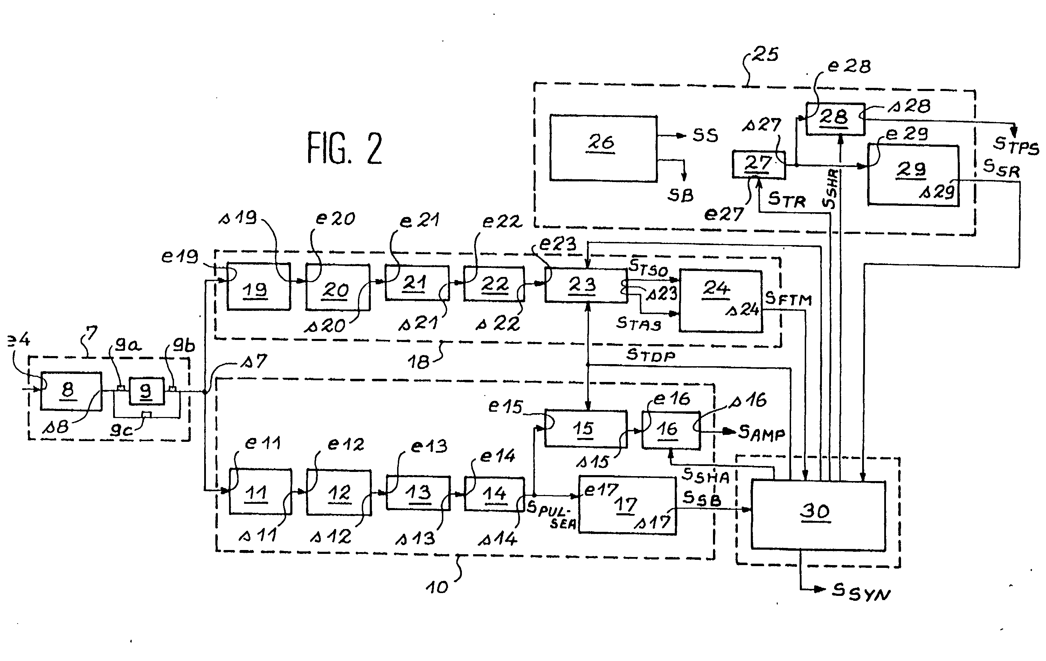

La carte électronique BIPAR, référencée 4 sur la figure 1, est représentée de façon plus détaillée sur la figure 2. Cette carte électronique 4 qui est connectée, comme on l'avait vu sur la figure 1, sur la sortie s3 du préamplificateur de charge 3, reçoit, sur son entrée e4, l'impulsion analogique provenant du préamplificateur de charge 3.

Cette carte électronique 4 comporte un circuit d'entrée 7 dans lequel l'impulsion analogique provenant du préamplificateur est introduite par l'intermédiaire d'un câble de liaison coaxial. L'entrée de la carte analogique 4, référencée e4, correspond donc également à l'entrée du circuit d'entrée 7. Le circuit d'entrée 7 a pour fonction :

- d'adapter l'impédance d'entrée de la carte électronique 4 à une valeur prédéfinie qui, avantageusement, est de 50 ohms ; cette valeur d'impédance de 50 ohms étant caractéristique du câble coaxial reliant le préamplificateur de charges 3 à la carte électronique BIPAR 4. Cette adaptation d'impédance a pour avantage d'éviter l'apparition d'une surtension sur l'impulsion analogique transmise ;
- d'amplifier l'impulsion analogique reçue, d'un gain préchoisi, de façon à pallier les pertes liées à l'adaptation. Par exemple, ce gain d'amplification est de 5 ;
- de choisir le signe de polarité de l'impulsion analogique en fonction de la polarité de l'impulsion provenant du préamplificateur de charges afin que le traitement effectué par la suite se fasse uniquement sur des impulsions positives.

Afin de réaliser ces fonctions, le circuit d'entrée 7 comporte un amplificateur d'entrée 8 qui assure l'adaptation d'impédance à la valeur prédéfinie et l'amplification de l'impulsion envoyée par le préamplificateur. A cet amplificateur 8, est connecté un inverseur 9 muni de straps 9a, 9b, 9c pour assurer éventuellement l'inversion du signe de polarité.

Le signal alors obtenu en sortie s7 du circuit d'entrée 7 est donc adapté pour être traité par le circuit d'amplitude 10 et par le circuit de temps 18.

Il attaque donc simultanément deux canaux, à savoir, la voie d'amplitude 10 (ou circuit d'amplitude 10) et la voie de temps 18 (ou circuit de temps 18).

Le but premier du circuit d'amplitude 10 est de permettre la mesure de l'amplitude de l'impulsion provenant du détecteur afin d'acquérir, avec précision, le maximum de cette impulsion après une mise en forme optimisant le rapport signal/bruit.

Cette fonction de détection du maximum de l'impulsion est assurée par deux éléments qui constituent la base de ce circuit d'amplitude 10 : un filtre passe-bande pour optimiser le rapport signal/bruit et un détecteur de pics.

Plus précisément, le circuit d'amplitude 10 comporte un différentiateur passif C-R 11, connecté sur la sortie s7 du circuit d'entrée 7. Ce différentiateur 11 permet de réaliser une pseudo annulation des pôles et des zéros ("*Pole-zero cancellation*", en termes anglosaxons) pour assurer un retour rapide au niveau de tension 0 V, après le passage d'une impulsion, ce qui permet, ainsi, de préparer l'arrivée de l'impulsion suivante. Par exemple, ce différentiateur 11 peut avoir une fréquence de coupure de 234 kH à -3 dB et peut être réalisé à partir d'une résistance de l'ordre de 10 Kohms, placée en parallèle avec une capacité de l'ordre de 8,6 nF pour réaliser la fonction "Pole zero cancellation".

Le circuit d'amplitude 10 comporte, connecté sur la sortie s11 du différentiateur 11, un filtre passe-bas 12, qui permet d'optimiser le rapport signal/bruit de l'impulsion. Selon l'invention, ce filtre 12 est un filtre intégrateur de BESSEL d'ordre 8 et de fréquence de coupure 500 kH à -6 dB, qui permet d'agir sur l'impulsion sans provoquer de surtension sur cette impulsion.

La sortie s12 de ce filtre 12 est connectée sur deux étages d'amplificateurs 13 et 14. Plus précisément, ces amplificateurs de gain 13 et 14 ont pour but d'augmenter le gain de l'impulsion à traiter, de façon à permettre une détection plus précise du maximum de cette impulsion.

Selon l'invention, ces amplificateurs sont des amplificateurs inverseurs : l'amplificateur 13 a un gain A, l'amplificateur 14 a un gain B. A titre indicatif, le gain A de l'amplificateur 13 peut être de -4 et le gain B de l'amplificateur 14 de -5,75.

Selon un mode de réalisation de l'invention, le second amplificateur inverseur 14 peut comporter un réglage d'offset.

La sortie s14 du second amplificateur de gain 14 est connectée, d'une part, sur un détecteur de pics 15 et, d'autre part, sur un comparateur 17 à qui elle envoie un signal $S_{PULSEA}$.

Le détecteur de pics 15 permet d'acquérir le maximum de l'impulsion. Il est piloté par un signal logique TTL référencé $S_{TDP}$ qui est envoyé par l'unité logique de contrôle 30, qui sera décrite ultérieurement. Plus précisément, lorsque le signal émis de l'unité logique 30 est à 1, le détecteur de pics 15 est bloqué à 0 V. Au contraire, si le signal émis par l'unité logique 30 est à 0, le détecteur de pics 15 est en mode acquisition.

De façon plus précise, le signal $S_{TDP}$ émis par l'unité logique 30 commande deux transistors, non représentés sur la figure pour des raisons de simplification de cette figure :

- un premier transistor destiné à remettre à 0 la capacité mémoire ; et
- un second transistor destiné à éviter que le détecteur de pics ne commute sur du bruit, ce qui génèrerait alors des parasites de commutation.

La sortie s15 de ce détecteur de pics est connectée sur un échantillonneur/bloqueur 16 qui assure la mémorisation de la valeur du maximum de l'amplitude. Cet échantillonneur/bloqueur 16 est également piloté par l'unité logique de contrôle 30, par un signal $S_{SHA}$.

En sortie s16 de cet échantillonneur/bloqueur, on obtient le signal d'amplitude $S_{AMP}$ représentatif de l'amplitude maximale de l'impulsion traitée. Ce signal $S_{AMP}$ sera utilisé par la suite par les moyens informatiques 6 pour déterminer les pertes de charges.

Parallèlement au détecteur de pics 15, la sortie s14 du second amplificateur de gain 14 est connectée sur un comparateur 17. Celui-ci assure la comparaison du signal amplifié par les amplificateurs 13 et 14 avec un seuil bas SB, ce qui permet de déclencher la mesure de l'impulsion et de marquer un "top" de début absolu pour la détermination du temps de montée. En effet, comme on le voit sur la figure 2, le signal $S_{SB}$ issu de ce comparateur 17 est envoyé à l'unité logique de contrôle 30 qui, elle-même est connectée au circuit de temps 18, ce qui permet ainsi de synchroniser le circuit d'amplitude 10 avec le circuit de temps 18.

Le front montant du signal $S_{SB}$ est caractéristique du début de temps de montée de l'impulsion. La réception de ce signal $S_{SB}$ par l'unité logique 30 conditionne donc la suite du traitement.

Comme expliqué précédemment, la sortie s7 du circuit d'entrée 7 est connectée, parallèlement au circuit d'amplitude 10, au circuit de temps 18.

Le circuit de temps 18 est d'une architecture comparable au circuit d'amplitude 10. Seuls les éléments nouveaux ou différents seront décrits.

Le circuit de temps 18 comporte un circuit de différentiation 19 connecté sur la sortie s7 du circuit d'entrée. Contrairement au différentiateur 11 du circuit d'amplitude 10, ce circuit de différentiation 19 ne comporte pas de pseudo "Pole-Zero cancellation", puisque le retour à 0 V ne demande pas à être connu de façon précise. Dans ce circuit de temps 18, le circuit de différentiation 19 a pour but de mieux marquer le passage au maximum de l'impulsion, qui constitue un instant capital pour cette mesure.

Selon un mode de réalisation de l'invention, cette fonction est réalisée au moyen d'un double filtre passif C-R ; à titre d'exemple, ce filtre peut avoir une fréquence ce coupure de 7,2 kHz à -6 dB.

La sortie S19 de ce circuit de différentiation 19 est connectée sur l'entrée e20 d'un filtre passe-bas 20. Avantageusement, ce filtre 20 est un filtre intégrateur de BESSEL d'ordre 8 ; il a un rôle sensiblement similaire au filtre 12 de la voie d'amplitude mais, de préférence, il a une fréquence de coupure de l'ordre de 1 Mhz à -6 dB pour filtrer le bruit sans altérer la forme d'origine des impulsions.

On remarquera que le choix des filtres est conditionné, entre autres, par les retards qu'ils induisent. Le retard le plus grand est occasionné par la voie d'amplitude qui inclut le filtre le plus bas en fréquence. Au contraire, le filtre de la voie temps ne doit pas, contrairement, à celui de la voie d'amplitude, avoir une fréquence de coupure basse trop élevée, sous peine d'autoriser les détections de pic, après le passage à la crête sur la voie temps.

Tout comme sur la voie d'amplitude 10, la sortie s20 du filtre passe-bas 20 est connectée sur deux étages d'amplificateurs inverseurs 21 et 22 de gain respectifs A et B. Selon un mode de réalisation, le gain A de l'amplificateur 21 vaut -2 et le gain B de l'amplificateur 22 vaut -3,75.

En sortie s22 du second étage d'amplificateur, c'est-à-dire de l'amplificateur de gain 22, l'impulsion se trouve sur un niveau continu de 1 V. Le réglage de cette tension continue peut être réalisé grâce à un potentiomètre ou au moyen d'un pont diviseur dont le calcul est optimisé en fonction des tensions d'offset.

La sortie s22 de ces amplificateurs inverseurs 21 et 22 est connectée sur un détecteur de pics 23 dont le fonctionnement de base est identique au détecteur de pics 15 de la voie d'amplitude 10.

Cependant, ce détecteur de pics 23 est utilisé de manière détournée contrairement au cas de la voie d'amplitude 10. En effet, pour la voie temps 18, il est utilisé de façon à déterminer la fin du temps de montée des impulsions. Cette technique permet d'opérer indifféremment sur des impulsions lentes ou rapides (pour notre application, la gamme des temps de montée est comprise entre 500 ns et 8 $\mu$s) et indépendamment de leurs formes. En d'autres termes, ce circuit s'adapte automatiquement à la partie basse-fréquence du spectre des impulsions, qui est plus ou moins étendue en fonction des pertes de charges.

Pour optimiser le fonctionnement du détecteur de pics 23, une modification est nécessaire par l'adjonction d'une résistance et d'une capacité, par rapport au schéma standard et connu du détecteur de pics 15. Par exemple, les valeurs de ces composants peuvent être, respectivement, d'environ 10 Kohms et 33 pF.

Ce détecteur de pics 23 a pour but, dans ce circuit de temps 18, de fournir l'information de fin de temps de montée de l'impulsion. Ce sont les propriétés des signaux internes $S_{TAS}$ et $S_{TSO}$ de ce détecteur de pics 23, en phase d'acquisition, qui permettent d'acquérir une telle information. $S_{TAS}$ est le signal d'asservissement du détecteur de pics 23, et $S_{TSO}$ le signal de sortie égal à la tension maximum de l'impulsion à l'entrée e23 du détecteur de pics 23. En effet, tant que l'impulsion est en phase de montée, le signal de tension $S_{TSO}$ est inférieur au signal de tension $S_{TAS}$ ; au contraire, le passage au maximum de l'impulsion provoque un changement dans les tensions, c'est-à-dire que $S_{TSO}$ devient supérieur à $S_{TAS}$. Ces deux signaux de tension $S_{TSO}$ et $S_{TAS}$ sont donc introduits dans un comparateur 24 qui effectue la comparaison entre ces deux signaux afin de déterminer si, comme expliqué précédemment, $S_{TSO}$ est supérieur à $S_{TAS}$ ; on détermine alors si l'impulsion est dans sa phase montante ou bien si elle a atteint son maximum.

La sortie s24 de ce comparateur 24 est connectée sur une des entrées de l'unité logique de contrôle 30 et fournit un signal logique $S_{FTM}$ dont le front montant marque la fin du temps de montée.

Cette unité logique de contrôle 30 est connectée également sur le détecteur de pics 23 du circuit de temps, tout comme elle l'était pour le détecteur de pics 15 du circuit d'amplitude 10 ; elle envoie donc aux deux détecteurs de pics 15 et 23 un même signal logique $S_{TDP}$ assurant leur synchronisation.

L'unité logique 30 peut également envoyer vers le comparateur 24 un autre signal logique $S_{ts}$ qui permet de bloquer le signal $S_{FTM}$ à 0 en début de mesure pour éviter les transitoires parasites.

Selon l'invention, la voie d'amplitude 10 et la voie de temps 18 sont étudiées pour que leur fonctionnement conjoint permette la mesure du temps de montée, d'une part, et, d'autre part, une mesure d'amplitude cohérente avec celle du temps de montée, en vue d'un traitement mathématique On dira alors que ces deux voies sont couplées. Ce couplage permet de déterminer le temps de montée de l'impulsion à partir de la détermination des fronts montants du signal $S_{SB}$ (franchissement du seuil bas) de la voix d'amplitude 10 et du signal $S_{FTM}$ (top marquant la fin du temps de montée) de la voix de temps 18. C'est ainsi que le temps de montée de l'impulsion est déterminé de façon indirecte, grâce, d'une part, au signal $S_{SB}$ mesuré sur la voie d'amplitude 10 et, d'autre part, au signal $S_{FTM}$ mesuré sur la voie des temps 18. Ces deux données relatives au franchissement du seuil bas et au top marquant la fin du temps de montée, sont envoyées toutes deux à l'unité logique de contrôle 30 qui renvoie ces informations à un circuit seuils/rampe 25.

Le couplage de ces deux voies temps et amplitude permet de s'affranchir des formes très diverses que peuvent avoir les impulsions issues des détecteurs CdTe. En effet, la voie d'amplitude 10 conduit, grâce à un filtre passe-bande étroit, à une forme d'impulsion constante. Ainsi, le top de début marqué par le signal $S_{SB}$, pour la mesure de temps de montée, correspond à une même référence de départ pour toutes les impulsions qui doivent être traitées par le système. Par ailleurs, la voie temps 18, grâce à un filtre passe-bande large, travaille par rapport à la forme réelle de la tension, de façon à détecter la fin réelle du temps de montée de l'impulsion et rendre compte ainsi des variations de pertes de charges.

Le couplage de ces voies amplitude et temps permet donc de mesurer électroniquement, de façon indirecte, le temps de montée de l'impulsion par l'intermédiaire d'une information représentative de ce temps de montée.

Comme cité précédemment, la carte électronique BIPAR comporte un circuit 25, appelé "circuit seuils/rampe". Ce circuit seuils/rampe comporte, d'une part, une source de tensions 26 qui délivre, à l'ensemble de la carte BIPAR, des tensions de référence utilisées, notamment, dans les comparateurs 17 et 29. Une tension de référence SB appelée "seuil bas" est utilisée, en particulier, dans le comparateur 17 où elle est comparée au signal $S_{PULSEA}$. Cette source de tensions 26 fournit également une tension de référence SS appelée "seuil de sécurité" dont l'utilisation sera décrite ultérieurement. Selon un mode de réalisation de l'invention, cette source de tensions de référence comporte des potentiomètres accessibles sur lesquels on peut effectuer les réglages de seuils choisis. Le circuit seuils/rampe 25 comporte, en outre, un circuit de rampe 27 qui reçoit à son entrée e27 un signal $S_{TR}$ émis par l'unité logique de contrôle 30 : quand ce signal $S_{TR}$ est à 0, un générateur de courant constant charge linéairement une capacité ; par contre, lorsque le signal $S_{TR}$ est à 1, cette même capacité est forcée à 0 V.

Le circuit de rampe 27 comporte, de plus, un amplificateur inverseur de gain connecté sur la capacité. Cet amplificateur peut avoir, par exemple, un gain de -6,45.

Le signal alors obtenu en sortie s27 de cette rampe 27 est un signal dont la portion linéaire est représentative du temps de montée de l'impulsion.

Un réglage de la tension continue de départ du circuit de rampe 27 permet de caler la rampe dans une fenêtre compatible avec celle du codeur analogique/numérique 5b qui est connecté sur la sortie s28 pour numériser le signal de temps de montée.

Selon une variante de l'invention, la rampe de tension obtenue grâce au générateur de courant constant du circuit 27 est réglable, ce qui permet une adaptation à différents types de convertisseurs.

Le signal ainsi obtenu en sortie s27 de la rampe 27 est introduit dans un échantillonneur/bloqueur 28 qui, en mode d'acquisition, suit la rampe et, après un front montant du signal $S_{FTM}$, mémorise la valeur dans la rampe lorsque le signal $S_{SHR}$ issu de la logique de contrôle 30 le commande.

On obtient alors, en sortie s28 de cet échantillonneur/bloqueur 28, le signal $S_{TPS}$ représentatif du temps de montée de l'impulsion issue du détecteur CdTe.

A la sortie s27 du circuit de rampe 27, est connecté également un comparateur 29 qui assure une comparaison entre le signal, en s27, provenant de la rampe 27 et un seuil de sécurité SS fournit par le circuit de tension de référence 26. Cela permet de fixer une limite maximum du temps de montée (pour augmenter la qualité de résolution du spectre) ou de détecter des évènements parasites, comme du bruit, qui peut déclencher le seuil bas SB mais, ne déclenche pas la fin du temps de montée $S_{FTM}$.

Ce comparateur 29 génère un signal logique $S_{SR}$ qui est envoyé à l'unité logique de contrôle 30.

Cette unité logique de contrôle 30 a pour but de piloter l'ensemble des circuits décrits précédemment.

Plus précisément, elle a pour fonction :

- d'assurer le séquencement des opérations lors d'une mesure normale et, en particulier, l'opération de détection du franchissement du seuil bas SB et le passage en mode de mesure ; elle assure également l'acquisition du temps de montée et du maximum d'amplitude, la mémorisation des données dans les échantillonneurs/bloqueurs et la demande de conversion en numérique par les créneaux de synchronisation $S_{SYN}$ qui relient la carte électronique BIPAR aux convertisseurs A/N montrés sur la figure 1 ;
- de détecter les empilements, en surveillant le seuil bas ; cette fonction est conditionnée par les performances de séparation du filtre 12 de la voie d'amplitude 10. On appelle "empilement" le résultat de deux interactions gamma entraînant le chevauchement de la première impulsion par la seconde impulsion issues du détecteur CdTe ;
- de surveiller la ligne de base, c'est-à-dire vérifier si la tension de 0 V est stable : lorsqu'une mesure se termine, l'unité logique de contrôle 30 vérifie qu'une impulsion n'est pas présente avant d'autoriser un nouveau cycle, ceci afin de s'assurer que ce cycle partira d'une ligne de base "propre". Dans le cas contraire, l'unité logique 30 décidera d'une procédure d'attente à mettre en oeuvre jusqu'à ce que le mode de mesure normal soit à nouveau possible ;
- de réaliser le contrôle du signal $S_{SR}$ marquant la limite haute de la rampe.

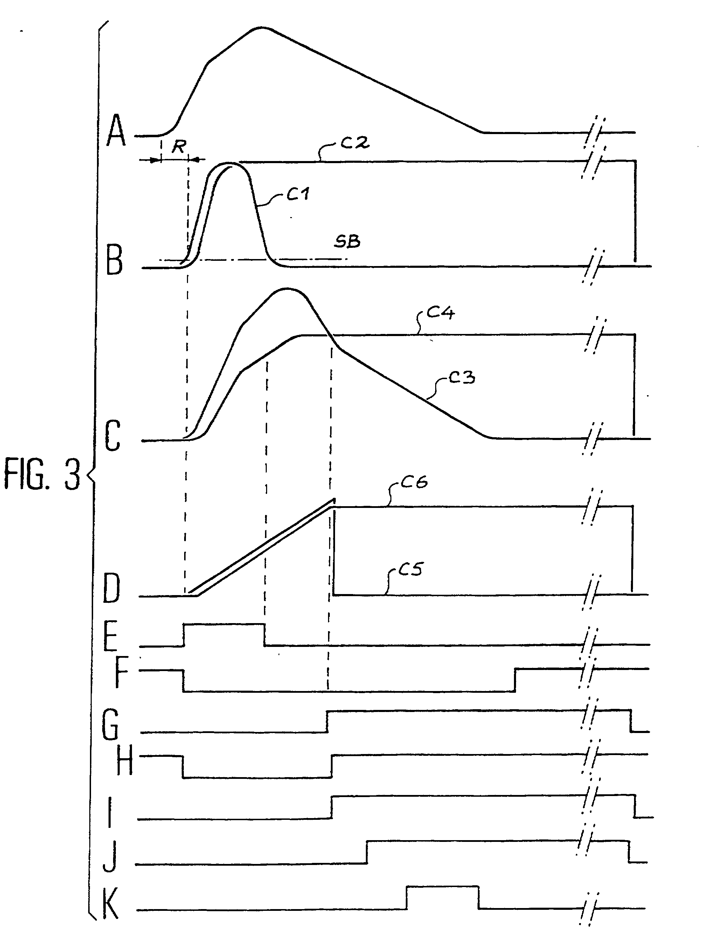

On a représenté sur la figure 3 différents chronogrammes montrant les différents signaux rencontrés à l'intérieur de la carte électronique BIPAR qui sont, pour la plupart, gérés par l'unité logique de contrôle 30.

Sur la voie A de la figure 3, on a représenté l'impulsion, telle qu'obtenue en sortie s22 du double étage d'amplificateurs 21, 22 de la voie de temps 18, c'est-à-dire l'impulsion se présentant à l'entrée e23 du détecteur de pics 23.

Sur la voie B, la courbe C1 représente le signal obtenu en sortie s14 du double étage d'amplificateurs 13 et 14 de la voie d'amplitude 10, c'est-à-dire le signal se présentant à l'entrée e15 du détecteur de pics 15 ; la ligne en traits mixtes représente la tension de seuil bas SB ; la courbe C2 représente le signal $S_{AMP}$ obtenu en sortie de la voie d'amplitude 10, c'est-à-dire le signal représentatif de l'amplitude maximum de l'impulsion issue du détecteur CdTe ; ce signal est décalé d'un retard R par rapport au signal de la voie A.

Tous les signaux C à K seront également décalés de ce retard R par rapport au signal de la voie A.

Sur la voie C de la figure 3, on a représenté la courbe C3, qui correspond au signal $S_{TAS}$ obtenu en sortie s23 du détecteur de pics 23 ainsi la courbe C4 qui correspond au signal $S_{TSO}$ obtenu à cette même sortie du détecteur de pics 23.

Sur la voie D de cette figure 3, on a représenté, par la courbe C5, le signal de rampe obtenu en sortie s27 du circuit de rampe 27 et, par la courbe C6, le signal de temps de montée $S_{TPS}$ obtenu en sortie s28 de la carte électronique BIPAR.

Sur la voie E de la figure 3, on a représenté la forme du signal $S_{SB}$ obtenu en sortie s17 du comparateur 17 de la voie d'amplitude 10.

Sur la voie F, on a représenté le signal $S_{TDP}$ envoyé par l'unité logique de contrôle 30 vers chacun des détecteurs de pics 23 et 15.

La voie G de la figure 3 montre le signal $S_{FTM}$ obtenu en sortie s24 du comparateur 24 de la voie de temps 18.

La voie H de la figure 3 montre le signal $S_{TR}$ envoyé par l'unité logique de contrôle 30 vers le circuit de rampe 27.

La voie I de la figure 3 montre le signal $S_{SHR}$ émis par l'unité logique de contrôle 30 et envoyé vers l'échantillonneur/bloqueur 28.

La voie J de la figure 3 montre le signal $S_{SHA}$ envoyé par l'unité logique de contrôle 30 vers l'échantillonneur/bloqueur 16.

Et la voie K de la figure 3 représente le signal de synchronisation $S_{SYN}$ envoyé par l'unité logique de contrôle 30 vers les convertisseurs analogiques/numériques 5a et 5b afin de permettre une synchronisation lors de la numérisation des signaux d'amplitude $S_{AMP}$ et de temps de montée $S_{TPS}$.

En regardant ces différents chronogrammes, on comprendra que lorsqu'une impulsion se présente à l'entrée de la carte électronique BIPAR, le front montant du signal $S_{SB}$ déclenche une mesure, ce qui provoque la mise à 0 du signal $S_{TDP}$, ainsi que du signal $S_{tr}$. Le front montant du signal $S_{FTM}$ provoque ensuite la mémorisation de la valeur de la rampe, à cet instant, sur ordre du signal $S_{SHR}$, puis de la valeur de l'amplitude, sur ordre du signal $S_{SHA}$. Aussitôt, le signal $S_{TR}$ est mis à 1, ce qui remet la rampe à 0 ; une horloge de période choisie (par exemple, 6 µs) est alors autorisée pour séquencer l'envoi des signaux de temps de montée et d'amplitude vers les codeurs analogiques/numériques; ceci représente la génération du signal $S_{SYN}$.

Selon une variante de l'invention, une ligne à retard est insérée dans la voie des temps 18, pour permettre l'utilisation de fréquences de filtres incompatibles en terme de déphasage, le temps de propagation de la voie des temps étant plus petit que celui de la voie d'amplitude 10.

Selon une autre variante de l'invention, des circuits de détection d'empilement et de restauration de ligne de base spécifiques, plus performants que les fonctions équivalentes réalisées par l'unité logique de contrôle 30, peuvent être ajoutés. Une telle variante permet d'augmenter la fréquence de comptage de la carte électronique BIPAR.

Selon une autre variante encore, en conservant la même architecture à l'électronique BIPAR, les fréquences de coupure de filtre, les gains des amplificateurs, le réglage du détecteur de pics 23 de la voie temps 18 et la pente de la rampe 27 peuvent être modifiés pour s'adapter à des types de détecteurs, autres que CdTe, pour lesquels la mesure simultanée de l'amplitude et des temps de montée présente un intérêt.

Selon encore une autre variante, en compliquant notablement la voie amplitude 10 et la voie temps 18, la carte électronique BIPAR pourrait traiter des impulsions bipolaires.

Comme on l'a vu sur la figure 1, les convertisseurs analogiques/numériques 5A et 5B sont reliés par l'intermédiaire d'un bus de données Bd à des moyens informatiques 6, du type ordinateur PC.

Par ailleurs, comme on l'a expliqué précédemment, la carte électronique BIPAR permet de déterminer une mesure de l'amplitude et du temps de montée de l'impulsion provenant du détecteur CdTe, dans le but de déterminer la correction de la perte de charge du détecteur. C'est cette correction de perte de charge qui est déterminée au moyen de cet ordinateur 6, car la relation entre le temps de montée et la perte de charge n'est pas immédiate. En effet, la relation entre le temps de montée et la perte de charge dépend, à la fois, de l'électronique et du détecteur CdTe utilisés. Il est donc nécessaire d'effectuer un étalonnage pour chaque détecteur. Conformément à l'invention, les moyens informatiques 6 permettent donc de déterminer la relation "amplitude/temps de montée" propre à chaque détecteur pour une électronique BIPAR donnée.

Le procédé d'étalonnage consiste globalement à mesurer, pour chaque temps de montée de l'impulsion, la réponse du détecteur à des sollicitations calibrées, c'est-à-dire des raies d'éléments radioactifs connues. Deux raies peuvent être suffisantes pour obtenir une correction tout à fait satisfaisante.

Pour mesurer la réponse du détecteur pour tous les temps de montée, il est nécessaire que ces deux raies aient une certaine énergie minimum, afin de pénétrer en profondeur dans le cristal de chaque détecteur mais, en même temps, une énergie pas trop élevée, afin que le temps d'étalonnage ne soit pas trop long.

En d'autres termes, l'étalonnage du dispositif consiste à exposer le détecteur que l'on va utiliser, à un mélange de ces deux sources et à enregistrer le nombre de coups reçus pour chaque amplitude et temps de montée.

A titre d'exemple, on peut préciser que, pour des détecteurs ayant des cristaux de deux millimètres d'épaisseur, les raies $57_{CO}$ à 122 KeV et $133_{BA}$ à 356 KeV conviennent parfaitement. Ces deux éléments présentent d'ailleurs l'avantage d'avoir des temps de vie relativement longs.

Plus précisément, le procédé d'étalonnage et de traitement des données mis en oeuvre par les moyens informatiques 6 fonctionne de la façon suivante :

- les données sont représentées dans un diagramme amplitude/temps, où l'axe des abscisses est l'axe des amplitudes et l'axe des ordonnées est l'axe des temps ;
- pour chaque temps de montée, le spectre des raies en amplitude est tracé ;
- en phase d'étalonnage : le procédé consiste à calculer automatiquement une loi mathématique représentative de la variation du maximum des raies en fonction de l'énergie et du temps de montée, ceci suivant des critères mathématiques dépendant des précisions souhaitées ;
- en phase de mesure normale : la loi de correction déduite de l'étalonnage est directement appliquée aux données lues dans la mémoire.

Sur la figure 4A, on a représenté dans un diagramme amplitude/temps de montée/ nombre de coups, où l'axe des x comprend 1024 canaux et l'axe des z 512 canaux, le nombre de coups reçus pour chaque amplitude et temps de montée. A partir de ce tracé, on a représenté par des lignes pointillées, les positions des maxima correspondant aux énergies E1 et E2. Ces positions ont ensuite été reportées dans la figure 4B, qui est un diagramme du temps de montée en fonction de l'amplitude.

Pour chaque temps de montée, en partant des temps les plus courts, on recherche les premiers maxima significatifs. Pour chaque temps de montée plus long, on définit deux régions d'intérêts, correspondant chacune à des raies, basées sur les résultats obtenus pour le temps de montée immédiatement inférieur.

Cette opération consiste à déterminer les positions des maxima $C_{1t}$ et $C_{2t}$ ainsi que la largeur des raies dans ces régions d'intérêts, pour chaque temps de montée t. On calcule alors les paramètres de corrections de gain et de décalage de la façon suivante :

$$\text{GAIN (t)} = (E2 - E1)/(C_{2t} - C_{1t}) ;$$

$$\text{DECALAGE (t)} = (E1 - \text{GAIN (t)} \times C_{1t}).$$

Ces paramètres sont ensuite sauvegardés dans un fichier qui constitue le fichier d'étalonnage du détecteur. On peut ainsi effectuer une série de mesures avec le même détecteur sans avoir à recommencer l'opération puisque les données nécessaires ont pu être mémorisées lors de l'étalonnage initial.

Tout changement de détecteurs nécessite un nouvel étalonnage à moins que ce nouveau détecteur n'ait déjà été étalonné. Si les sources radioactives d'étalonnage ne sont pas trop gênantes vis-à-vis de la mesure, les étapes d'étalonnage et de mesure peuvent être simultanées.

Plus précisément, cette opération consiste à effectuer une recherche de maximum dans une région d'intérêt (N1, N2) du spectre. Le spectre est lissé en prenant une moyenne courante portant sur un nombre DIM de canaux, où DIM = (N2 - N1)/4.

La dérivée D du spectre lissé (SL) est alors calculée :

$$D(i) = SL(i + DIM/2) - SL(i - DIM/2).$$

Le passage à 0 de D est obtenu par interpolation linéaire entre les deux canaux l'entourant, cette valeur étant la position de la raie. Les positions des extrema DROITE et GAUCHE de D permettent d'estimer la largeur totale à mi-hauteur du pic de la raie (FWHM), en appliquant une relation qui dépend de la dimension de la région d'intérêt :

$$FWHM = [DROITE - GAUCHE]^2 - 0,87 \times (DIM/2)^2,$$

les valeurs GAUCHE et DROITE, obtenues au temps t - 1, définissant les limites N1 et N2 de la région d'intérêt au temps t.

Le procédé mis en oeuvre par ces moyens informatiques consiste ensuite à corriger toute mesure ultérieure sur la base des données du fichier d'étalonnage pour générer un spectre corrigé par rapport aux pertes de charges. Cette opération consiste à redistribuer les coups mesurés dans le canal C avec le temps de montée t entre les énergies :

$$GAIN (t) \times c + DECALAGE (t)$$

et

$$GAIN (t) \times (c + 1) + DECALAGE (t).$$

Toute mesure effectuée ultérieurement avec le détecteur étalonné est alors corrigible, en temps réel ou en temps différé, de la même manière.

Le procédé de correction, décrit précédemment, peut bien sûr être simplifié en utilisant une seule raie de spectre calibrée, au détriment bien entendu de la précision ; ; au contraire, il peut utiliser plus de deux raies de spectre, de façon à augmenter encore la précision de l'étalonnage.

D'autre part, ce procédé peut être mis en oeuvre sur des mesures numérisées de l'amplitude et du temps de montée d'impulsions délivrées par un détecteur présentant des pertes de charges, dans le cas où ces mesures seraient fournies par un appareil électronique autre que la carte électronique BIPAR, par exemple l'appareil fabriqué par la Société EURORAD, évoqué dans le paragraphe "Etat de la technique" du présent texte.

Ce dispositif de l'invention, adapté à un détecteur CdTe de bonne qualité, permet de réaliser un appareil de terrain simple, souple d'emploi, facilement transportable, relativement peu coûteux et présentant de très bonnes performances spectroscopiques.

Il permet également de réaliser une gamma caméra, sans photomultiplicateurs et donc avec tous les gains matériels que cela implique. Cette gamma caméra peut être utilisée dans de nombreux contextes : imagerie médicale, contrôle et démantèlement de centrales nucléaires, astronomie gamma, par exemple.

**Revendications**

1. Système de traitement d'impulsions issues d'un détecteur présentant des pertes de charges, comportant :

   - un circuit d'entrée (3) apte à engendrer lesdites impulsions sous forme analogique ; et
   - des moyens de mesure électroniques (4) assurant une mesure de l'amplitude de chaque impulsion analogique ainsi qu'une mesure du temps de montée de cette impulsion,

   **caractérisé en ce que** :

   - les moyens de mesure électroniques (4) comportent un circuit d'amplitude (10) assurant l'acquisition d'une valeur maximum de l'amplitude de l'impulsion analogique, et un circuit de temps (18) assurant une minimisation du bruit de cette impulsion ainsi qu'une détection de la fin du temps de montée de cette impulsion, ces deux circuits étant couplés pour assurer la détermination du temps de montée de l'impulsion.

2. Système selon la revendication 1, **caractérisé en ce que** les moyens de mesure électroniques comportent un circuit de rampe (25) connecté au circuit d'amplitude et au circuit de temps.

3. Système selon la revendication 2, **caractérisé en ce que** les moyens de mesure électroniques comportent une unité logique de contrôle (30) connectée au circuit d'amplitude, au circuit de temps et au circuit de rampe pour contrôler l'échange d'informations entre ces circuits.

4. Système selon l'une quelconque des revendications 1 à 3, **caractérisé en ce qu'**il comporte des moyens de correction (6) pour corriger, en fonction du temps de montée et de l'amplitude de l'impulsion, les pertes de charges du détecteur.

**5.** Système selon la revendication 4, **caractérisé en ce que** lesdits moyens de correction (6) sont des moyens informatiques aptes à modéliser les pertes de charges du détecteur puis à déterminer et corriger, en fonction de la modélisation du détecteur et du temps de montée déterminé par les moyens de mesure, les pertes de charges dues à ce détecteur.

**6.** Système selon l'une quelconque des revendications 1 à 5, **caractérisé en ce que**, pour la détermination de la fin du temps de montée, ledit circuit de temps (18) comporte un détecteur de pics (23) présentant des signaux représentatifs, respectivement, de l'amplitude de l'impulsion ($S_{TSO}$) et d'un signal d'asservissement ($S_{TAS}$) permettant l'acquisition de cette amplitude, et **en ce qu'**il comporte un comparateur (24) recevant à ses deux entrées lesdits signaux représentatifs.

**7.** Procédé de traitement d'impulsions issues d'un détecteur présentant des pertes de charges, comportant les étapes suivantes effectuées à partir d'informations d'amplitude et de temps de montée issues du système de traitement d'impulsions conforme à l'une quelconque des revendications 1 à 6 et comportant :

- une étape d'étalonnage consistant à tracer pour chaque temps de montée le spectre des raies en amplitude dans un diagramme amplitude/temps où l'axe des abscisses est l'axe des amplitudes, et à calculer automatiquement une loi mathématique représentative de la variation du maximum des raies en fonction de l'énergie et du temps de montée, ceci suivant des critères mathématiques dépendants des précisions souhaitées ; et
- une étape de mesure normale consistant à tracer pour chaque temps de montée le spectre des raies en amplitude dans un diagramme amplitude/temps où l'axe des abscisses est l'axe des amplitudes, et à appliquer directement aux données lues dans la mémoire la loi de correction déduite de l'étalonnage.

**8.** Procédé de traitement d'impulsions selon la revendication 7, **caractérisé en ce que** l'étape d'étalonnage utilise deux énergies $E_1$ et $E_2$ et élabore des corrections mathématiques par les étapes ci-après :

- recherche pour chaque temps de montée en partant des plus courts les premiers maxima significatifs ;
- pour chaque temps de montée plus long, définition des deux régions d'intérêt, correspondant à chacune des raies, basées sur les résultats obtenus pour le temps de montée immédiatement inférieur ;
- dans chacune de ces régions d'intérêt, détermination des maxima $C_{1t}$ et $C_{2t}$, ainsi que de la largeur des raies dans ces régions d'intérêt, pour chaque temps de montée t ;
- calcul des paramètres de correction de gain et de décalage par :

$$GAIN(t) = (E_2 - E_1)/(C_{2t} - C_{1t})$$

$$DECALAGE(t) = (E_1 - GAIN(t) \times C_{1t}).$$

**Patentansprüche**

**1.** System zur Verarbeitung von von einem Detektor ausgehenden Impulsen, die Ladungs- bzw. Spannungsverluste darstellen, mit:

einer Eingangsschaltung (3), die die Impulse in analoger Form erzeugen kann, und
elektronischen Meßmitteln (4), die eine Messung der Amplitude jedes analogen Impulses sowie eine Messung der Anstiegszeit dieses Impulses ausführen,

**dadurch gekennzeichnet, daß**:

die elektronischen Meßmittel (4) eine Amplitudenschaltung (10), die einen Maximalwert der Amplitude des analogen Impulses erfasst, sowie eine Zeitschaltung (18), die das Rauschens dieses Impulses minimiert und das Ende der Anstiegszeit dieses Impulses erfasst, aufweisen, und diese beiden Schaltungen gekoppelt sind, um die Anstiegszeit des Impulses zu bestimmen.

**2.** System nach Anspruch 1, **dadurch gekennzeichnet, daß** die elektronischen Meßmittel eine Rampenschaltung bzw. eine Schaltung mit linear ansteigender Spannung (25) umfassen, die mit der Amplitudenschaltung und der Zeitschaltung verbunden ist.

**3.** System nach Anspruch 2, **dadurch gekennzeichnet, daß** die elektronischen Meßmittel eine Steuerlogikeinheit (30) umfassen, die mit der Amplitudenschaltung, der Zeitschaltung und der Rampenschaltung verbunden ist, um den Austausch von Informationen zwischen diesen Schaltungen zu steuern.

**4.** System nach einem der Ansprüche 1 bis 3, **dadurch gekennzeichnet, daß** es Korrekturmittel (6) zum Korrigieren der Spannungsverluste des Detektors in Abhängigkeit von der Anstiegszeit und der Amplitude des Impulses umfaßt.

**5.** System nach Anspruch 4, **dadurch gekennzeichnet, daß** die Korrekturmittel (6) Datenverarbeitungsmittel sind, die die Spannungsverluste des Detektors modellieren und dann in Abhängigkeit von der Modellierung des Detektors und der durch die Meßmittel bestimmten Anstiegszeit die von diesem Detektor hervorgerufenen Spannungsverluste bestimmen und korrigieren können.

**6.** System nach einem der Ansprüche 1 bis 5, **dadurch gekennzeichnet, daß** für die Bestimmung des Endes der Anstiegszeit die Zeitschaltung (18) einen Spitzendetektor (23) aufweist, der jeweils für die Impuls-Amplitude ($S_{TSO}$) und ein Servosignal ($S_{TAS}$), das die Erfassung dieser Amplitude ermöglicht, repräsentative Signale liefert, und daß es/sie eine Vergleichsschaltung (24) aufweist, welche an ihren zwei Eingängen die repräsentativen Signale empfängt.

**7.** Verfahren zur Verarbeitung von von einem Spannungsverluste darstellenden Detektor ausgehenden Impulsen mit den folgenden Schritten, die auf der Basis von von dem Impulsverarbeitungssystem gemäß einem der Ansprüche 1 bis 6 ausgehenden Informationen zur Amplitude und zur Anstiegszeit durchgeführt werden und umfassen:

einen Markierungs- bzw. Eichschritt, der darin besteht, für jede Anstiegszeit das Amplituden-Linienspektrum in einem Amplituden-/Zeitdiagramm aufzuzeichnen, in dem die Abzissenachse die Amplitudenachse ist, und automatisch eine mathematische Regel zu berechnen, die für die Abweichung bzw. Schwankung des Maximums der Linien in Abhängigkeit von der Energie und der Anstiegszeit repräsentativ ist, und zwar gemäß mathematischer Kriterien, die von den gewünschten Präzisionen abhängen, und
einen normalen Meßschritt, der darin besteht, für jede Anstiegszeit das Amplituden-Linienspektrum in einem Amplituden-/Zeitdiagramm aufzuzeichnen, wobei die Abszissenachse die Amplitudenachse ist, und auf die in den Speicher gelesenen Daten die von der Markierung abgeleitete Korrekturregel direkt anzuwenden.

**8.** Verfahren zur Verarbeitung von Impulsen nach Anspruch 7, **dadurch gekennzeichnet, daß** der Markierungs- bzw. Eichschritt zwei Energien $|E_1$ und $E_2|$ anwendet und die mathematischen Korrekturen durch folgende Schritte erarbeitet:

Suchen der ersten signifikanten Maxima für jede Anstiegszeit, ausgehend von den kürzesten,
für jede längere Anstiegszeit Definition der zwei interessierenden Bereiche, die jeder der Linien entsprechen, basierend auf den für die unmittelbar kürzere Anstiegszeit erhaltenen Resultaten,
in jedem dieser interessierenden Bereiche, Ermittlung der Maxima $|C_{1t}$ und $C_{2t}|$ sowie der Breite der Linien in diesen interessierenden Bereichen für jede Anstiegszeit $|t|$,
Berechnung der Korrekturparameter Verstärkungsfaktor und Phasenverschiebung durch:

$$\text{VERSTÄRKUNG } (t) = (E_2 - E_1) / (C_{2t} - C_{1t})$$

$$\text{VERSCHIEBUNG}(t) = (E_1 - \text{VERSTÄRKUNG}(t) \times C_{1t}).$$

**Claims**

**1.** System for the processing of pulses from a detector having charge losses, having:

- an input circuit (3) able to produce said pulses in analog form and
- electronic measuring means (4) ensuring a measurement of the amplitude of each analog pulse, as well as a measurement of the rise time of said pulse, **characterized in that**:

- the electronic measuring means (4) incorporate an amplitude circuit (10) ensuring the acquisition of a maximum value of the amplitude of the analog pulse and time circuit (18) ensuring a minimizing of the noise of said pulse, as well as a detection of the end of the rise time of said pulse, said two circuits being coupled so as to ensure the determination of the pulse rise time.

2. System according to claim 1, **characterized in that** the electronic measuring means incorporate a ramp circuit (25) connected to the amplitude circuit and to the time circuit.

3. System according to claim 2, **characterized in that** the electronic measuring means incorporate a logic control (30) connected to the amplitude circuit, the time circuit and the ramp circuit to control the information exchange between these circuits.

4. System according to any one of the claims 1 to 3, **characterized in that** it has correction means (6) for correcting, as a function of the rise time and amplitude of the pulse, the detector charge losses.

5. System according to claim 4, **characterized in that** the correction means (6) are data processing means able to model the charge losses of the detector, followed by the determination and correction, as a function of the modelling of the detector and the rise time determined by the measuring means, the charge losses due to said detector.

6. System according to any one of the claims 1 to 5, **characterized in that**, for the determination of the end of the rise time, said time circuit (18) has a peak detector (23) with representative signals respectively of the amplitude of the pulse ($S_{TSO}$) and a control signal ($S_{TAS}$) permitting the acquisition of said amplitude and it incorporates a comparator (24) receiving said representative signals at its two inputs.

7. Process for the processing of pulses from a detector having charge losses, comprising the following stages performed on the basis of amplitude and rise time informations from the pulse processing system in accordance with any one of the claims 1 to 6 and incorporating:

- a calibration stage plotting for each rise time the spectrum of the amplitude lines in an amplitude/time diagram, where the abscissa axis is the amplitude axis, and automatically calculating a mathematical law representing the variation of the maximum of the lines as a function of the energy and the rise time, in accordance with mathematical criteria dependent on the desired precision levels, and
- a normal measuring stage consisting of plotting for each rise time the spectrum of amplitude lines in an amplitude/time diagram, where the abscissa axis is the amplitude axis, and directly applying to the data read in the memory the correction law deduced from the calibration.

8. Process for the processing of pulses according to claim 7, **characterized in that** the calibration stage uses two energies $E_1$ and $E_2$ and effects mathematical corrections by the following stages:

- seeking the first significant maxima for each rise time, starting from the shortest,
- for each longer rise time, definition of two interest regions, corresponding to each of the lines, based on the results obtained for the immediately lower rise time,
- in each of these interest regions, determination of the maxima $C_{1t}$ and $C_{2t}$, as well as the width of the lines in said interest regions for each rise time t,
- calculation of the gain and offset correction parameters:

$$GAIN(t) = (E_2 - E_1)/(C_{2t} - C_{1t})$$

$$OFFSET(t) = (E_1 - GAIN(t) \times C_{1t}).$$

FIG.1

FIG. 4 B

FIG. 4A

FIG. 2

FIG. 3